# EUROPEAN PATENT APPLICATION

(11) **EP 3 680 696 A1**
(43) Date of publication of application: **15.07.2020**
(21) Application number: 20150146.7
(22) Date of filing: 03.01.2020
(51) Int. Cl.: G02B 6/00

(54) **CARBON NANOTUBE YARNS AND OPTICAL FIBERS COMPOSITE RIBBON CABLE**

(30) Priority: 09.01.2019 IT 201900000253
(71) Applicant: Prysmian S.p.A., 20126 Milan (IT)
(72) Inventor: DE RAI, Luca Giorgio Maria, I-20126 MILANO (IT); FALLAHMOHAMMADI, Ehsan, I-20126 MILANO (IT); PARRIS, Donald Ray, I-20126 MILANO (IT)
(74) Representative: Maccalli, Marco

(57) **Abstract**

A cable (**100**; **200**) comprises: a telecommunication section (**101**; **201**) comprising at least one optical fiber (**105**; **205a-205b, 205c-205d**); at least two electric sections (**102**; **202**) each comprising at least one bundle of carbon nanotube yarns (**110a**, **110b**; **210a-210b**, **210c-210d**, **210e-210f**, **210g-210h**); and a matrix (**125**; **225**) embedding the telecommunication section (**101**; **201**) and the at least two electric sections (**102**; **202**). The telecommunication section (**101**; **201**) is arranged in the matrix (**125**; **225**) in between two electric sections (**102**; **202**) and the optical fiber (**105**; **205a-205b**, **205c-205d**) and the bundles of carbon nanotube yarns (**110a**, **110b**; **210a-210b**, **210c-210d**, **210e-210f**, **210g-210h**) are co-planar to form a ribbon.

## Description

### Background

### Technical field

The present disclosure relates to the field of cables for communications. Particularly, the present disclosure relates to a composite ribbon cable with optical fibers and carbon nanotube yarns.

### Overview of the state of the art

Nowadays (and, foreseeably, more and more in the future) huge volume of data, along with electric power delivery, is needed in every field, and the demand is quickly growing in the transport (automotive) sector too.

The challenge not only concerns the amount of data to be transmitted, but also the bit-rate of transmission (transmission bandwidth), the dimension (size) and the weight of the cables used for data transmission, which should fit the dimension and structure of the vehicles where the cables should be installed.

EP 2 682 795 discloses a cable structure for use with a cable blowing technique which comprises two optical fibres and two carbon nanotube wires, the optical fibres and the carbon nanotube wires being received within a protective layer. In a FTTP ("Fiber-To-The-Premises") network the carbon nanotube wires may be used to provide electrical power.

### Summary of the disclosure

The Applicant observes that the cable structure disclosed in EP 2 682 795 has a round cross-section (necessary for installation with a cable blowing technique): such a cable shape is not the best choice in many applications, like in the automotive field.

Also, a round cross-section cable requires the conductors to be stranded for having a uniformly flexible cable and for avoiding undue stress to the conductors while bending. The conductor stranding not only implies an additional step and apparatus in the manufacturing process, but also, as in the case of the cable of EP 2 682 795, carbon nanotube wires carrying positive and negative electric potential can get in touch and may cause short-circuit.

The Applicant has realized that a cable meeting all the aforementioned requirements without loosing in performance is strongly needed.

The Applicant has found that arranging optical fibres and carbon nanotube (CNT) yarns in a ribbon cable a profitable combination of high transmission bandwidth, compact size and light weight is attained in combination with a structure (that of an essentially flat ribbon) that is particularly suitable for installation and routing in vehicles.

According to an aspect thereof, the present disclosure is directed to a cable comprising:
- a telecommunication section comprising at least one optical fibre;
- at least two electric sections each comprising at least one bundle of carbon nanotube yarns; and
- a matrix embedding the telecommunication section and the at least two electric sections,
wherein the telecommunication section is arranged in the matrix in between two electric sections and the optical fibre and the bundles of carbon nanotube yarns are co-planar to form a ribbon.

In an embodiment, in the cable of the present description the telecommunication section may include two optical fibres.

In an embodiment, the cable of the present description comprises at least two telecommunication sections.

In an embodiment, in the cable of the present description each electric section comprises two bundles of carbon nanotube yarns.

In an embodiment of the present description, each telecommunication section is arranged in the matrix in between two respective electric sections. Accordingly, the cable comprises an even number of electric sections.

In the cable of the present invention each electric section is intended for carrying a positive or negative electric potential only.

According to an embodiment, each optical fibre and each bundle of carbon nanotube yarns of the cable of the present description have outer diameters substantially similar one another.

In the cable of the present description, the optical fibres can be single-mode optical fibres, multi-mode optical fibres or a combination thereof.

According to an embodiment of the present description, each bundle of carbon nanotube yarns includes a group of carbon nanotube yarns covered by a coating layer. For example, the coating layer can be 5-10 µm thick.

In an embodiment, the coating layer of each bundle of carbon nanotube yarns is made of a radiation cured material, such as an acrylate. In an embodiment, the acrylate material of the coating layer is a radiation cured material having a modulus of 50-100 MPa and an elongation at break of 100-120%.

In an embodiment, the carbon nanotube in the yarns of the present disclosure are of single-wall (SWNTs) or of the few-wall type (FWNTs).

In an embodiment, the matrix of the cable of the present disclosure is made of a radiation cured material, such as an acrylate.

According to an embodiment, the acrylate material of the cable matrix is different from the acrylate material of the bundle of carbon nanotube yarns.

According to another aspect, the present disclosure is directed to a process for producing a cable, comprising:
- providing a telecommunication section including at least one optical fibre;
- providing at least two groups of carbon nanotube yarns;
- providing each group of carbon nanotube yarns with a respective coating layer to form a bundle;
- embedding in a matrix the telecommunication section and at least two electric sections, each comprising at least one bundle of carbon nanotube yarns;
wherein said embedding in a matrix comprises arranging the telecommunication section in between the two electric sections and arranging the optical fibre and the bundles of carbon nanotube yarns co-planarly to form a ribbon.

The cable according to the present disclosure is advantageous because the ribbon, and thus the relatively flat, nature thereof, is particularly suitable for installations where the space is limited. For example, in the automotive field, the ribbon cable can be easily routed through a vehicle under the upholstery.

The bundles of carbon nanotube yarns of the electric sections allow a suitable electrical current transport while acting as tensile strength members for the ribbon cable, too. The carbon nanotube yarns make the ribbon cable more resistant to tensile stresses. With respect to a copper electrical conductor, the carbon nanotube yarns make the ribbon more flexible. Moreover, carbon nanotube yarns are lighter than metal, e.g. copper, conductors, thus allowing a reduction in weight of the cable.

In the cable according to the present disclosure, each electric section is electrically insulated from the other/s by the interposition of a telecommunication section.

The cable according to the present disclosure is also advantageous because the same, or quite similar, manufacturing apparatuses and installation (e.g., optical fibre splicing) tools generally used for purely optical ribbon cables can be employed for the present cable.

The summary provided in this section of the present document is to provide an understanding of some aspects of the disclosure. As will be appreciated, other embodiments of the disclosure are possible utilizing, alone or in combination, one or more of the features set forth above or described in detail below.

### Brief description of the drawings

The features mentioned above, as well as other features and advantages, will be made apparent by the following detailed description of exemplary and non-limiting embodiments of cables according to the present disclosure. While reading the following detailed description, reference should be made to the annexed drawings, wherein:
**Fig. 1** schematically depicts a cable according to an embodiment of the present disclosure, and
**Fig. 2** schematically depicts a cable according to another embodiment of the present disclosure.

### Detailed description of exemplary embodiments of the present disclosure

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

For the purpose of the present description and of the appended claims, the words "a" or "an" should be read to include one or at least one and the singular also includes the plural unless it is obvious that it is meant otherwise. This is done merely for convenience and to give a general sense of the invention.

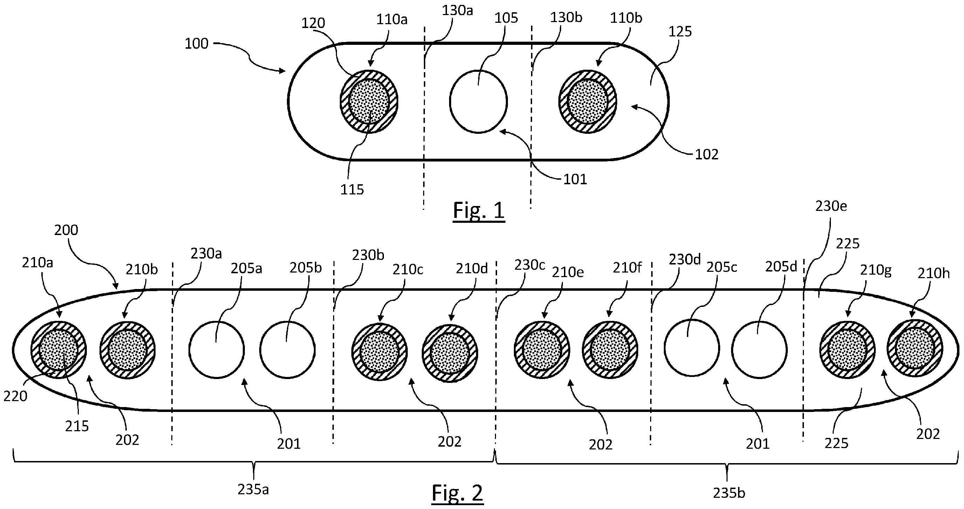

Making now reference to **Fig. 1****,** there is schematically depicted a cable **100** according to an embodiment of the present disclosure. The cable **100** is a ribbon cable. The cable **100** contains a telecommunication section **101** comprising one optical fibre **105,** and two electric sections **102** each comprising a bundle of carbon nanotube yarns **110a** and **110b.** The number of optical fibres and the number of bundles of carbon nanotube yarns contained in the cable according to the present disclosure is not limitative: a cable according to the present disclosure might contain more than one optical fibre and more than two bundles of carbon nanotube yarns.

In the exemplary embodiment of **Fig. 1****,** the optical fibre **105** and the two bundles of carbon nanotube yarns **110a** and **110b** (more precisely, their longitudinal axes) lay substantially on a same plane (with the cable in an un-twisted condition). This arrangement helps in keeping the cable **100** flat, of reduced thickness.

In the exemplary embodiment of **Fig. 1** the optical fibre **105** is arranged in between the bundles of two carbon nanotube yarns **110a** and **110b.** This arrangement ensures a suitable separation (electric insulation) between the two bundles **110a** and **110b.**

The optical fibre **105** can be equidistant from the two bundles **110a** and **110b.**

The optical fibre **105** can be a single-mode optical fibre or a multi-mode optical fibre. In an embodiment, the optical fibre has a glass core surrounded by a glass cladding and one or more coating layers surrounding the glass cladding. The optical fibre can have an outer diameter of 245 ±10 µm µm.

Each bundle **110a** and **110b** comprises a group of carbon nanotube yarns **115** surrounded by a coating layer **120.** The two bundles **110a** and **110b** can have equal outer diameter. The outer diameter of the two bundles **110a** and **110b** can be equal to, substantially equal to or similar to the outer diameter of the optical fibre **105.** For example, the outer diameter of the two bundles **110a** and **110b** can be of 250 µm. Each bundle **110a, 110b** can transport up to 5•10⁻² A of electrical current (@ 70°C).

The optical fibre **105** and the two bundles **110a** and **110b** are embedded in a matrix **125.** The thickness of the cable **100** can be of about 300 - 350 µm.

In use, the optical fibre **105** may serve for transmission of signals. In use, the two bundles of carbon nanotube yarns **110a** and **110b** may serve as strengthening members for the cable **100** and for electrical energy or data delivery. As electric conductors, one of the bundle **110a** and **110b** is at a first electrical potential while the other one **110a** and **110b** is at a second electrical potential (different from the first electrical potential). For example, the first electrical potential can be a positive electrical potential (with respect to a reference potential) and the second electrical potential can be a negative electrical potential (with respect to the reference potential). The arrangement of the optical fibre **105** in between the two bundles **110a** and **110b** ensures a suitable electrical insulation between the two bundles of carbon nanotube yarns **110a** and **110b,** substantially reducing or even removing the risk of electrical shorts.

In use, during installation of the cable **100,** the cable **100** can be at least partially torn apart along one or both of two separation lines **130a** and **130b,** for example for purposes of splicing the optical fibre **105** and/or for interconnection of the bundles **110a** and **110b** to electronic devices.

**Fig. 2** schematically depicts a cable **200** according to another embodiment of the present disclosure. In the embodiment of **Fig. 2** the cable **200** contains a plurality of optical fibers and a plurality of more than two carbon nanotube yarns. Particularly, the cable **200** contains two telecommunication sections **201,** each comprising a pair of optical fibres amounting to four optical fibres **205a** - **205d** in the cable, and four electric sections **202,** each comprising two bundles of carbon nanotube yarns amounting to eight bundles **210a** - **210h** in the cable.

Similarly to the exemplary embodiment of **Fig. 1****,** also in the exemplary cable **200** of **Fig. 2** the optical fibres **205a** - **205d** and the eight bundles of carbon nanotube yarns **210a** - **210h** (more precisely, their longitudinal axes) lay substantially on a same plane (with the cable in an un-twisted condition). This arrangement helps in keeping the cable **200** flat, of reduced thickness.

The two optical fibres **205a** and **205b** and **205c** and **205d** in each telecommunication section **201** are arranged adjacent to one another. The two bundles **210a** and **210b, 210c** and **210d, 210e** and **210f, 210g** and **210h** in each electric section **202** are arranged adjacent to one another. In the exemplary embodiment of **Fig. 2****,** each optical fibre pair is arranged in between two adjacent pairs of bundle of carbon nanotube yarns. This arrangement ensures a suitable electric insulation between the carbon nanotube yarns.

The optical fibres **205a** - **205d** and the bundles **210a** - **210h** can be all equidistant.

The optical fibres **205a** - **205d** can be single-mode optical fibers or a multi-mode optical fibers. The optical fibres **205a** - **205d** can have an outer diameter of 245 ±10 µm µm.

As in the embodiment of **Fig. 1****,** each bundle **210a-210h** comprises a groups of carbon nanotube yarns **215** surrounded by a coating layer **220.** The bundles **210a** - **210h** can all have equal outer diameter. The outer diameter of the bundles **210a** - **210h** can be equal to, substantially equal to or similar to the outer diameter of the optical fibres **205a** - **205d.** For example, the outer diameter of the carbon nanotube yarns **210a** - **210h** can be of 250 µm.

The optical fibres **205a** - **205d** and the bundles **210a** - **210h** are embedded in a matrix **225.** The thickness of the cable **200** can be of about 300 - 350 µm.

The cable **200** as a whole can be divided into two components: a first component **235a** and a second component **235b.** The first component **235a** includes (from left to right in **Fig. 2**) the bundles **210a** and **210b,** the optical fibres **205a** and **205b** and the bundles **210c** and **210d,** while the second component **235b** includes (from left to right in **Fig. 2**) the bundles **210e** and **210f,** the optical fibres **205c** and **205d** and the bundles **210g** and **210h.**

In use, during installation of the cable **200,** the cable **200** can be at least partially torn apart along one or more of five separation lines **230a** - **230e,** for example for purposes of splicing the optical fibers **205a** - **205d** and/or for interconnection of the carbon nanotube yarns **210a** - **210h** to electronic devices.

An embodiment of a process for producing a cable according to the present disclosure comprises the following steps.

A group of carbon nanotube yarns is covered with a layer of a radiation curable material, such as an acrylate to form a coating layer. For example, the coating layer has a thickness of 5-10 µm. For example, the radiation curable material can have a viscosity of 4000-6000 Cps. Once cured, the material of the coating layer can have a modulus of 50 MPa -100 MPa. Once cured, the material of the coating layer can have an elongation at break of 100% - 120%.

The group of carbon nanotube yarns covered by the layer of radiation curable material is submitted to a curing step to obtain a bundle of carbon nanotube yarns with a coating layer. For example, in the curing step the curable material of the layer is cured to 92%-97%.

A selected number of optical fibres and of bundles of carbon nanotube yarns (previously submitted to curing) is passed in a ribbon guide at 40-50°C for embedding them in a radiation curable material. For example, the radiation curable matrix can have a viscosity of 2000-5000 CpS at said temperature. When passing the selected number of optical fibres and of bundles in the ribbon guide, the optical fibres and the bundles are positioned to obtain the desired arrangement of optical fibres and bundles in the cable, e.g. the arrangement of **Fig. 1** or **Fig. 2****.**

The radiation curable material with optical fibres and bundles of carbon nanotube yarns embedded therein is then cured.

The cable according to the present disclosure is advantageous because being a ribbon it is relatively flat, a property that makes the cable particularly suitable for installations where the space is limited. For example, in the automotive field, the ribbon cable can be easily routed through a vehicle under the upholstery. For example, the cable according to the present disclosure can be expediently used for interconnecting electronic apparatuses located at the front and at the back of a vehicle: the optical fiber(s) in the cable allows a fast exchange of large amounts of data (and does not suffer from electromagnetic fields, contrary to metal signal lines) while at the same time delivering electric power, e.g. for supplying the apparatuses located at the back of the vehicle.

The carbon nanotube yarns in the cable allow a suitable electrical current transport. Despite the electrical conductivity of carbon nanotube yarns is presently not yet as high as the electrical conductivity of some metal electrical conductors, like copper electrical conductors (the specific electrical conductivity of carbon nanotube yarns can reach 19,000 S•cm²/g), there are several applications (e.g., in the automotive field) in which it is not necessary to deliver high electric power and the electrical conductivity of carbon nanotube yarns is more than sufficient. At the same time, the carbon nanotube yarns while acting as tensile strength members for the ribbon cable, too. Particularly, the carbon nanotube yarns make the ribbon cable more resistant to tensile stresses. With respect to a copper electrical conductor, the carbon nanotube yarns make the ribbon more flexible. Moreover, carbon nanotube yarns are lighter than metal, e.g. copper, conductors, thus allowing a reduction in weight of the cable. Another advantage of carbon nanotube yarns over metal, e.g. copper, conductors is that the carbon nanotube yarns can be used as they are, without any electrical insulation.

The cable according to the present disclosure is also advantageous because the same, or quite similar, manufacturing apparatuses and installation (e.g., optical fiber splicing) tools can be re-used as those normally exploited for purely optical ribbon cables.

As mentioned in the foregoing, the number of optical fibers and the number of carbon nanotube yarns contained in the cable according to the present disclosure is not limitative, and the examples presented in connection with **Figs. 1** and **2** are merely illustrative. Irrespective of the number of optical fibers and bundles of carbon nanotube yarns contained in the cable, a possible arrangement can be having groups of one or more bundles of carbon nanotube yarns on both sides of a group of one or more optical fibers.

## Claims

1. A cable (**100;200**) comprising:
- a telecommunication section (**101;201**) comprising at least one optical fiber (**105; 205a-205b, 205c-205d**);
- at least two electric sections (**102;202**) each comprising at least one bundle of carbon nanotube yarns (**110a, 110b; 210a-210b, 210c-210d, 210e-210f, 210g-210h**); and
- a matrix (**125; 225**) embedding the telecommunication section (**101;201**) and the at least two electric sections (**102;202**),
wherein the telecommunication section (**101;201**) is arranged in the matrix (**125; 225**) in between two electric sections (**102;202**) and the optical fiber (**105; 205a-205b, 205c-205d**) and the bundles of carbon nanotube yarns (**110a, 110b; 210a-210b, 210c-210d, 210e-210f, 210g-210h**) are co-planar to form a ribbon.

2. The cable of claim 1, wherein the telecommunication section (**101;201**) comprises two optical fibres (**205a-205b, 205c-205d**).

3. The cable of claim 1 comprising at least two telecommunication sections (**201**).

4. The cable of claim 1, wherein each electric section (**202**) comprises two bundles of carbon nanotube yarns (**210a-210b, 210c-210d, 210e-210f, 210g-210h**).

5. The cable of claim 1, wherein each telecommunication section (**101;201**) is arranged in the matrix (**125; 225**) in between two respective electric sections electric section (**102;202**) so that the cable (**100;200**) comprises an even number of electric sections (**102;202**)

6. The cable of claim 1, wherein each electric section (**102;202**) is intended for carrying a positive or negative electric potential only.

7. The cable of claim 1, wherein each optical fibre (**105; 205a-205b, 205c-205d**) and each bundle of carbon nanotube yarns (**110a, 110b; 210a-210b, 210c-210d, 210e-210f, 210g-210h**) have outer diameters substantially similar one another.

8. The cable of claim 1, wherein each bundle of carbon nanotube yarns (**110a, 110b; 210a-210b, 210c-210d, 210e-210f, 210g-210h**) includes a group of carbon nanotube yarns (**115, 215**) covered by a coating layer (**120, 220**).

9. The cable of claim 8, wherein the coating layer (**120, 220**) is 5-10 µm thick.

10. The cable of claim 1, wherein the carbon nanotubes in the yarns are of single-wall (SWNTs) or of the few-wall type (FWNTs).

11. A process for producing a cable comprising:
- providing a telecommunication section (**101;201**) including at least one optical fiber (**105; 205a-205b, 205c-205d**);
- providing at least two groups of carbon nanotube yarns (**115**);
- providing each group of carbon nanotube yarns (**115**) with a respective coating layer (**120**) to form a bundle (**110a, 110b; 210a-210b, 210c-210d, 210e-210f, 210g-210h**);
- embedding in a matrix (**125; 225**) the telecommunication section (**101;201**) and at least two electric sections (**102;202**) each comprising one bundle of carbon nanotube yarns (**110a, 110b; 210a-210b, 210c-210d, 210e-210f, 210g-210h**),
wherein said embedding in a matrix comprises arranging the telecommunication section (**101;201**) in between the two electric sections (**102;202**) and arranging the optical fibers (**105; 205a-205b, 205c-205d**) and the bundles of carbon nanotube yarns (**110a, 110b; 210a-210b, 210c-210d, 210e-210f, 210g-210h**) co-planarly to form a ribbon.
